# EUROPÄISCHE PATENTANMELDUNG

(11) **EP 1 744 148 A2**
(43) Veröffentlichungstag der Anmeldung: **17.01.2007**
(21) Anmeldenummer: 06115259.1
(22) Anmeldetag: 10.06.2006
(51) Int. Cl.: G01N 21/88, G01N 21/95

(54) **Vorrichtung zur Inspektion eines Wafers**

(30) Priorität: 15.07.2005 DE 102005033036
(71) Anmelder: Vistec Semiconductor Systems GmbH, 35578 Wetzlar (DE)
(72) Erfinder: Kreh, Albert, 35606, Solms (DE); Kampe-Zadler, Chirstof, 35576, Wetzlar (DE); Backhauss, Henning, 35579, Wetzlar (DE)
(74) Vertreter: Reichert, Werner Franz

(57) **Zusammenfassung**

Die Erfindung betrifft eine Vorrichtung und ein Verfahren zur automatischen Inspektion eines Wafers mit einer Lichtquelle und einer Beleuchtungsoptik zur Beleuchtung des Wafers für die Inspektion, wobei die Beleuchtungsoptik einen variablen Graufilter umfasst zur Anpassung der Beleuchtungsleistung.

## Beschreibung

Die Erfindung betrifft eine Vorrichtung zur Beleuchtung eines Wafers im Rahmen einer Inspektionseinrichtung zur Inspektion eines Wafers. Ferner betrifft die Erfindung ein Verfahren zur Anpassung der Beleuchtungsleistung im Rahmen der Inspektion eines Wafers.

Vorrichtungen und Verfahren der genannten Art sind bekannt. Bei diesen Vorrichtungen und Verfahren wird innerhalb einer Inspektionseinrichtung der Wafer von einer Beleuchtungseinrichtung mit einer Lichtquelle und einer Beleuchtungsoptik beleuchtet, so dass von einer Detektionseinrichtung ein Messsignal oder ein Bild des Wafers zur Weiterverarbeitung aufgenommen wird.

Einrichtungen der genannten Art sind in der Industrie im Rahmen der Computer-Chip-Herstellung als automatische Makrodefektdetektions- und Klassifikationssysteme im Einsatz. Das System Leica LDS 3300 M ist ein typisches Beispiel. Dieses System wird der Industrie als abgeschlossenes Komplettsystem geliefert. Im Betrieb ist dabei eine gleichmäßige kontinuierliche Qualität der Inspektion und Defektkontrolle erforderlich. Die Systeme laufen mit im Wesentlichen gleicher Software und vor allem mit im wesentlichen gleichen Recipes jeweils für ähnliche Waferdesignarten. Gleiche Waferdesignarten sind Wafer mit gleichem Chipdesign und vergleichbarer Produktionsfortschrittsstufe. Gleiche Waferdesignarten werden also von den Inspektionssystemen unter gleichen Voraussetzungen inspiziert. Dies gilt auch im Falle mehrerer getrennt stehender gleicher Systeme."Recipes" sind die Vorgabeeinstellungen, die die Mess-Software auf die unterschiedlichen Waferlayout-Arten und Produktionsstufen der Wafer anpassen.
Es zeigte sich, dass vor allem eine gleichmäßige Beleuchtung für eine reproduzierbare Inspektion von Bedeutung ist. Die zur Beleuchtung üblicherweise eingesetzten Blitzlampen weisen jedoch bereits im Neuzustand einen erheblichen Unterschied in ihrer Lichtleistung auf. Dazu kommt, dass im Verlauf der Lebensdauer einer Blitzlampe die Leistung der Blitzlampe erheblich abnehmen kann. Beide Effekte können jeweils einen Faktor 2 oder mehr in der Lichtleistung ausmachen. Die Lichtleistung der Blitzlampen kann elektronisch etwa über deren Kondensator geregelt werden. Dieser Regelungsbereich wird jedoch mindestens zum Teil zur Variation der Beleuchtungsleistung im Rahmen der vorgesehenen Inspektion benötigt. Die unterschiedliche maximale Beleuchtungsleistung der Blitzlampen schränkt daher nutzbare Dynamik zur Anpassung der Beleuchtungsleistung im Rahmen der Inspektionsmessung durch die elektronische Ansteuerung der Blitzlampe ein.

Der Erfindung liegt daher die Aufgabe zugrunde, eine Vorrichtung und ein Verfahren der eingangs beschriebenen Art so weiterzuentwickeln, dass der elektronisch steuerbare Variationsbereich der Beleuchtungseinrichtung für mehrere gleichartige Systeme und im Zeitverlauf erhalten bleibt.

Diese Aufgabe wird durch die im Anspruch 1 bestimmte Vorrichtung ebenso wie durch das in Anspruch 17 bestimmte Verfahren gelöst. Vorteilhafte Ausgestaltungen der Erfindung sind in den weiteren Unteransprüchen gegeben.

Erfindungsgemäß ist die Aufgabe bei einer Vorrichtung zur Inspektion eines Wafers mit einer Lichtquelle und einer Beleuchtungsoptik zur Beleuchtung des Wafers für die Inspektion dadurch gelöst, dass die Beleuchtungsoptik einen variablen Graufilter umfasst zur Anpassung der Beleuchtungsleistung. Durch den variablen Graufilter können Lichtquellen mit höherer Beleuchtungsleistung auf das Niveau von verwendeten Lichtquellen mit niedriger Beleuchtungsleistung angepasst werden. Dabei wird sinnvollerweise auf die schwächste noch tolerierte Lichtquelle und die maximale tolerierte Altersabschwächung derselben abgestellt.

Vorzugsweise ist vorgesehen, dass der Graufilter zwischen Blitzlampe samt Reflektor und Beleuchtungsoptik angeordnet ist, wobei die Beleuchtungsoptik insbesondere eine oder mehrere Lichtleitfasern umfassen kann. Eine solche Anordnung ermöglicht eine besonders kompakte Bauweise.

Zweckmäßigerweise ist vorgesehen, dass die Lichtquelle und der Graufilter auf einem gemeinsamen Träger angeordnet sind. Dies hat den Vorteil, dass der Graufilter und die Blitzlampe eine definierte Anordnung, insbesondere einen definierten Abstand und damit eine definierte optische Wirkungsweise aufweisen.

Günstigerweise sind die Lichtquelle und der Graufilter in einem gemeinsamen Gehäuse angeordnet. Dies hat den Vorteil, dass die Lichtquelle und der eingestellte Graufilter in ihrem gemeinsamen Gehäuse im Inspektionssystem als eine standardisierte Gesamtlichtquelle erscheinen. Darüber hinaus ist eine Standardisierung der Lichtquelle im Gehäuse außerhalb des Inspektionssystems möglich.

Vorteilhafterweise ist vorgesehen, dass die Transmission des Graufilters stufenlos verstellbar ist. Dies ermöglicht eine optimale Anpassung der Lichtleistung der Lichtquelle an den benötigten Standard.

Mit Vorteil ist der Graufilter als drehbares Filterrad ausgebildet. Dies ermöglicht eine besonders platzsparende Anordnung und eine besonders einfache Ansteuerung der Verstellung.

Der Graufilter kann als Graukeil selbst stufenlos ausgebildet sein oder Stufen aufweisen, die einen geringeren Abstand als die Apertur am Graufilter aufweisen. Daneben kann der Graufilter als Schlitz oder Siebblende ausgebildet sein, wobei stets mehrere Schlitze oder Löcher von der Apertur erfasst werden. Durch die jeweils so definierte Apertur ist ebenfalls eine stufenlose Einstellung des Filters möglich.

Mit besonderem Vorteil ist vorgesehen, dass die Transmission des Graufilters automatisch verstellbar ist. Dadurch kann in bestimmten Abständen ohne Bedienereingriff die standardmäßige maximale Beleuchtungsleistung der Lichtquelle hergestellt oder wiederhergestellt werden.

Vorzugsweise ist vorgesehen, dass der Graufilter einen Transmissionsbereich in der Größenordnung von 10% bis etwa 100%, insbesondere von 5% bis etwa 100% aufweist.

Mit besonderem Vorteil ist vorgesehen, dass der Graufilter einen Transmissionsbereich in der Größenordnung von 1% bis etwa 100% aufweist. Die angegebenen Transmissionsbereiche haben den Vorteil, dass die Intensitätsschwankungen der maximalen Beleuchtungsleistung durch verschiedene Blitzlampen und durch den Alterungsprozess der Blitzlampen kompensiert werden können.

Vorteilhafterweise ist vorgesehen, dass der Graufilter gleichzeitig ein UV-Sperrfilter ist. Die Sperrwirkung kann durch geeignete Auswahl des Trägerglases erreicht werden oder durch eine weitere Beschichtung des Filterglases.

Idealerweise ist vorgesehen, dass der Graufilter mit einem Farbkonversionsfilter vereinigt ist. Die Farbkonversionsfilterwirkung kann durch eine zusätzliche Schicht auf dem Graufilter erreicht werden. Diese Schicht kann etwa auf der gegenüberliegenden Seite der Grauschicht aufgebracht sein. Dies gilt ebenso für den UV-Sperrfilter. Durch die zusätzliche Aufnahme der UV-Sperrfilterwirkung und/oder der Farbkonversionsfilterwirkung erfährt der Graufilter einen zusätzlichen Nutzen und es kann ein zusätzliches Bauelement bzw. zwei Bauelemente eingespart werden.

Entsprechend einer Ausführungsform verfügt die Lichtquelle selbst über eine Einrichtung zur Leistungsanpassung. Diese kann etwa elektronisch erfolgen.

Entsprechend einer weiteren Ausführungsform ist die Lichtquelle eine Blitzlampe.

Entsprechend einer bevorzugten Ausführungsform umfasst die Blitzlampe einen variabel aufladbaren Blitzkondensator.

Erfindungsgemäß ist die oben genannte Aufgabe bei einem Verfahren zur Anpassung der Beleuchtungsleistung für gleiche Inspektionssysteme mit gleichen Recipes zur Inspektion eines Wafers mit den folgenden Verfahrensschritten gelöst:
- optisches Dämpfen der Beleuchtungsleistung in dem Inspektionssystem mit einem variablen Filter im Beleuchtungsstrahlengang auf einen definierten Leistungslevel bei definierter prozentualer Lampenleistung,
- Messen der Leistung der Beleuchtung bei definierter prozentualer Lampenleistung,
- Nachregeln der optischen Dämpfung nach dem Messen auf den definierten Leistungslevel bei der definierten prozentualen Lampenleistung.
   "Recipes" sind die Vorgabeeinstellungen, die die Mess-Software auf die unterschiedlichen Waferlayout-Arten und Produktionsstufen der Wafer anpassen. Definierte prozentuale Lampenleistung bedeutet hier, dass die Lampenleistung durch elektronische Steuerung auf einen definierten prozentualen Wert von der maximalen Lampenleistung gebracht wird, etwa auch auf den 100%igen maximalen Lampenleistungswert. Der definierte Leistungslevel ist derjenige Level der Beleuchtungsleistung der schwächsten, für das Waferinspektionssystem noch akzeptierten Blitzlampe abzüglich deren erwarteten Leistungseinbuße durch den Alterungsprozess. Dem Messen der Leistung entspricht selbstverständlich auch ein Messen der Intensität, wie selbstverständlich die Bezugnahme auf die Leistung der Betrachtung der Intensität gleichkommt.
   Durch die elektronisch steuerbare und vom variablen Graufilter unabhängige Einrichtung zur Leistungsanpassung kann die Beleuchtungsleistung bei der durch den variablen Graufilter standardisierten maximalen Beleuchtungsleistung durch das Softwareprogramm zum Betrieb der Waferinspektionsanlage frei gesteuert werden.
   Vorzugsweise ist vorgesehen, dass das optische Dämpfen mit einem variablen Graufilter im Beleuchtungsstrahlengang nach der Lichtquelle erfolgt. Variabler Graufilter kann ein Graukeil oder eine Filterscheibe sein.
   Zweckmäßigerweise erfolgt das Messen und Nachregeln in definierten Abständen. Dadurch ist eine gleichbleibende Qualität der Beleuchtung sichergestellt. Die Abstände können abhängig sein vom Waferdurchsatz oder von der Standzeit.
   Entsprechend einer Ausführungsform erfolgt das Messen und Nachregeln im Abstand von einem Tag. Abstände von einigen Stunden oder von mehreren Tagen oder mehreren Wochen sind ebenfalls denkbar.
   Nach einer bevorzugten Weiterbildung der Erfindung erfolgt das Messen und Nachregeln automatisiert.
   Im Folgenden wird die Erfindung anhand schematischer Darstellungen zu einem Ausführungsbeispiel näher erläutert. Gleiche Bezugszeichen in den einzelnen Figuren beizeichnen dabei gleiche Elemente. Es zeigen
   - Fig. 1: einen Schnitt durch eine erfindungsgemäße Blitzlampe samt Filter und Gehäuse,
   - Fig. 2: eine schematische Darstellung Beleuchtungsoptik in einer Waferinspektionsanlage,
   - Fig. 3: eine zweite schematische Darstellung der Beleuchtungsoptik in einer Waferinspektionsanlage und
   - Fig.4: eine dritte schematische Darstellung der Beleuchtungsoptik in einer Waferinspektionsanlage.

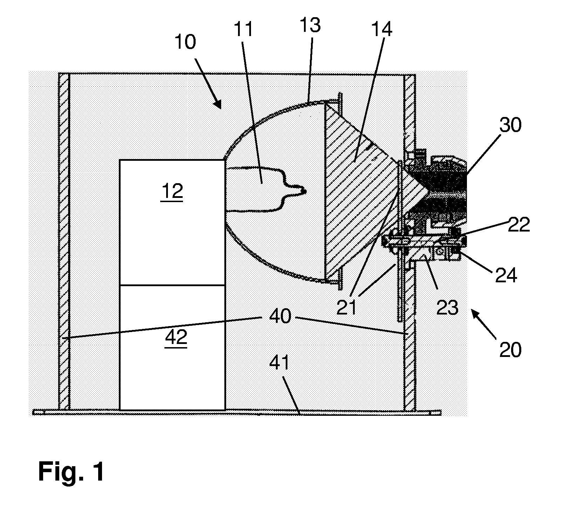

   Die Figur 1 zeigt die Blitzlampe 10 mit der Blitzbirne 11 als Lichtquelle, der Fassung 12 und dem Reflektor 13. Die Stromzufuhr für die Blitzbirne über ihre Fassung umfasst eine elektrische Drosseleinrichtung 42, mit der die Blitzleistung der Blitzlampe geregelt werden kann. Die Blitzlampe hat beispielsweise eine übliche Maximalleistung von 50 mJ. Über die elektrische Drosseleinrichtung ist die Blitzlampenleistung im Bereich von 100% bis zu 10% der maximalen Blitzleistung, in diesem Fall also von 50 mJ bis 5 mJ verstellbar. Die für die Blitzlampe tolerierte Streuung der maximalen Blitzleistung liegt für verschiedene Blitzbirnen etwa im Bereich von 50 mJ bis 125 mJ, weist also einen Faktor für den Schwankungsbereich von 2,5 auf.
   Die Blitzlampe wirft aufgrund ihres Reflektors einen Aperturkegel 14. In den Aperturkegel ist die Filterscheibe 21 der Filtereinrichtung 20 eingebracht. Die Filterscheibe weist eine Drehachse 22 auf, die in einem Drehlager 23 gelagert ist. Die Drehachse 22 endet in einer Koppelstelle 24, über die die Stellung der Filterscheibe verdrehbar ist. Die Verdrehung kann entweder manuell oder über einen angeflanschten Antrieb automatisch gesteuert erfolgen. Der Aperturkegel 14 dringt durch die Filterscheibe hindurch in den Bereich der Lichtleiterfassung 30. Bei in der Figur nicht eingezeichnetem eingebrachtem Lichtleiterkabel koppelt der Aperturkegel 14 in das Lichtleiterkabel ein. Die Blitzlampe 10 und die Filtereinrichtung 20 sind von einem gemeinsamen Gehäuse 40 umgeben und auf einem gemeinsamen Träger 41 angebracht. Das Gehäuse umfasst auch die elektrische Drosseleinrichtung 42.
   Aufgrund von Alterung kann die Blitzleistung um den Faktor 2, also um 50% abnehmen, in unserem Beispiel also von 50 mJ auf 25 mJ. Es ergibt sich also eine Toleranzbreite für die Blitzleistung von minimal 25 mJ bis maximal 125 mJ im vorliegenden Beispiel. Um diese Toleranzbreite mittels der elektrischen Drosseleinrichtung der Blitzbirne aufzufangen, würde ein sehr großer Bereich der Dynamik der Drosseleinrichtung nur für die Anpassung verloren gehen. Im Rahmen der Waferinspektion ist jedoch ein sehr hoher Dynamikbereich für die Variation der Blitzlampenleistung erforderlich. Gelegentlich ist der volle Variationsbereich der elektrischen Drosseleinrichtung zur Durchführung der softwaregesteuerten Messprogramme erforderlich. Durch die entsprechende Einstellung der Filterscheibe auf einen definierten Leistungslevel von hier 25 mJ kann jede in unserem Beispiel tolerierte Blitzlampe in jeder Alterungsstufe verwendet werden und liefert die gleiche maximale Leistung von 25 mJ. Somit ist für jede tolerierte Blitzlampe der gesamte Dynamikbereich der elektrischen Drosseleinrichtung zur Veränderung der Lampenleistung zur Durchführung der Messprogramme verwendbar.

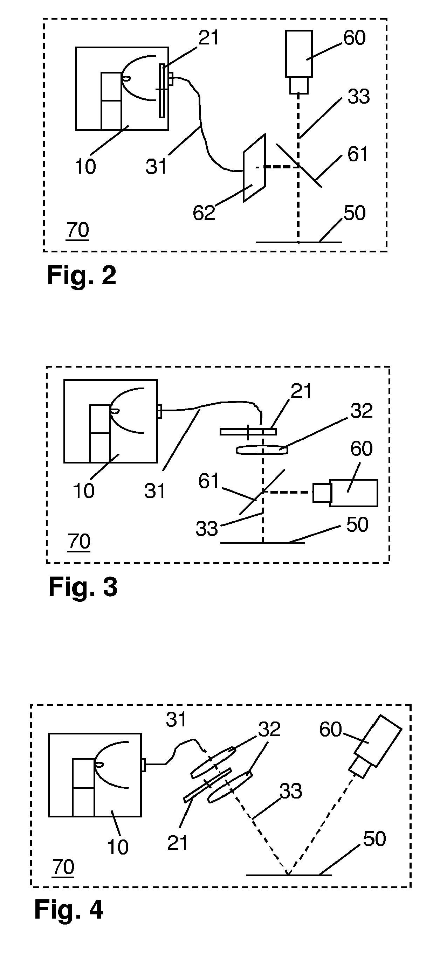

   Die Figur 2 zeigt eine Blitzlampe 10 mit einer drehbaren Filterscheibe 21 innerhalb eines Waferinspektionsystems 70. Das Waferinspektionsystem umfasst unter anderem eine Kamera 60, einen Teilerspiegel 61, ein Leuchtfeld 62, einen Lichtleiter 31 und den zu untersuchenden Wafer 50. Der Lichtleiter 31 führt das von der Blitzbirne der Blitzlampe durch die Filterscheibe 21 getretene Licht auf das Leuchtfeld 62. Das dort diffus gestreute Licht gelangt über den Teilerspiegel auf die Oberfläche des Wafers 50 und beleuchtet diesen zur Aufnahme durch die Kamera 60. Der Teilerspiegel, das Leuchtfeld und die Kamera ist sind so angeordnet, dass das Licht des Leuchtfeldes 62 in seinem Zentralstrahl senkrecht auf die Oberfläche des Wafers fällt ebenso wie der Zentralstrahl der Kamera, sodass eine Hellfeldabbildung ausgebildet ist.
   Die Figur 3 zeigt ein Waferinspektionsystem mit einer ähnlichen Anordnung wie in Figur 2. Hier jedoch ist die drehbare Filterscheibe 21 nicht im Gehäuse der Blitzlampe 10 angeordnet, sondern zwischen dem der Blitzlampe abgewandtem Ende des Lichtleiters 32 und einer Linsenoptik zur senkrechten Beleuchtung des Wafers. Ein Teilerspiegel 61 ist wiederum so angeordnet, dass ein Kamerabild senkrecht von der Oberfläche des Wafers, also im Hellfeld aufgenommen wird.
   Die Figur 4 zeigt ein Waferinspektionsystem mit einer weiteren Anordnung ähnlich wie in Figur 2. Hierbei ist die drehbare Filterscheibe 21 innerhalb einer Linsenoptik 32 angeordnet. Wiederum ist die Beleuchtung und Detektion für die Hellfeldbetrachtung ausgelegt, wobei hier die zentralen Beleuchtungsstrahlen und Abbildungsstrahlen nicht wie in den Figuren 2 und 3 senkrecht auf die Oberfläche des Wafers treffen, sondern jeweils unter einem gleichen, gespiegelten Winkel.

## Patentansprüche

1. Vorrichtung zur automatischen Inspektion eines Wafers mit einer Lichtquelle und einer Beleuchtungsoptik zur Beleuchtung des Wafers für die Inspektion, **dadurch gekennzeichnet, dass** die Beleuchtungsoptik einen variablen Graufilter umfasst zur Anpassung der Beleuchtungsleistung.

2. Vorrichtung nach Anspruch 1, **dadurch gekennzeichnet, dass** der Graufilter zwischen Blitzlampe samt Reflektor und Beleuchtungsoptik angeordnet ist, wobei die Beleuchtungsoptik insbesondere eine oder mehrere Lichtleitfasern umfasst.

3. Vorrichtung nach Anspruch 1, **dadurch gekennzeichnet, dass** der Graufilter zwischen Beleuchtungsoptik und Wafer angeordnet ist, wobei die Beleuchtungsoptik insbesondere eine oder mehrere Lichtleitfasern umfasst.

4. Vorrichtung nach einem der vorhergehenden Ansprüche, **dadurch gekennzeichnet, dass** der Lichtquelle und der Graufilter an einem gemeinsamen Träger angeordnet sind.

5. Vorrichtung nach einem der vorhergehenden Ansprüche, **dadurch gekennzeichnet, dass** der Lichtquelle und der Graufilter in einem gemeinsamen Gehäuse angeordnet sind.

6. Vorrichtung nach einem der vorhergehenden Ansprüche, **dadurch gekennzeichnet, dass** die Transmission des Graufilters stufenlos verstellbar ist.

7. Vorrichtung nach einem der vorhergehenden Ansprüche, **dadurch gekennzeichnet, dass** der Graufilter als drehbares Filterrad ausgebildet ist.

8. Vorrichtung nach einem der vorhergehenden Ansprüche, **dadurch gekennzeichnet, dass** der Graufilter Filterstufen unterschiedlicher Transmission aufweist und die Apertur des Graufilters sich über mindestens 2 Filterstufen erstreckt.

9. Vorrichtung nach einem der vorhergehenden Ansprüche, **dadurch gekennzeichnet, dass** die Transmission des Graufilters automatisch verstellbar ist.

10. Vorrichtung nach einem der vorhergehenden Ansprüche, **dadurch gekennzeichnet, dass** der Graufilter einen Transmissionsbereich in der Größenordung von 10% bis etwa 100% aufweist.

11. Vorrichtung nach einem der vorhergehenden Ansprüche, **dadurch gekennzeichnet, dass** der Graufilter einen Transmissionsbereich in der Größenordung von 1 % bis etwa 100% aufweist.

12. Vorrichtung nach einem der vorhergehenden Ansprüche, **dadurch gekennzeichnet, dass** der Graufilter gleichzeitig ein UV-Sperrfilter ist.

13. Vorrichtung nach einem der vorhergehenden Ansprüche, **dadurch gekennzeichnet, dass** der Graufilter mit einem Farbkonversionsfilter vereinigt ist.

14. Vorrichtung nach einem der vorhergehenden Ansprüche, **dadurch gekennzeichnet, dass** die Lichtquelle selbst über eine Einrichtung zur Änderung der Beleuchtungsintensität verfügt.

15. Vorrichtung nach einem der vorhergehenden Ansprüche, **dadurch gekennzeichnet, dass** die Lichtquelle eine Blitzlampe ist.

16. Vorrichtung nach einem der vorhergehenden Ansprüche, **dadurch gekennzeichnet, dass** die Lichtquelle eine Blitzlampe ist, die einen variabel aufladbaren Blitzkondensator umfasst.

17. Verfahren zur Anpassung der Beleuchtungsleistung für gleiche Inspektionssysteme mit gleichen Recipes zur Inspektion eines Wafers, **gekennzeichnet durch** die folgenden Verfahrensschritte:
- optisches Dämpfen der Beleuchtungsleistung im Inspektionssystem mit einem variablen Filter im Beleuchtungsstrahlgang auf einen definierten Leistungslevel bei definierter prozentualer Lampenleistung
- Messen der Leistung der Beleuchtung bei definierter prozentualer Lampenleistung
- Nachregeln der optischen Dämpfung nach dem Messen auf den definierten Leistungslevel bei der definierten prozentualen Lampenleistung.

18. Verfahren nach Anspruch 17, **dadurch gekennzeichnet, dass** das optische Dämpfen mit einem variablen Graufilter im Beleuchtungsstrahlgang nach der Lichtquelle erfolgt.

19. Verfahren nach einem der Ansprüche 17 bis 18, **dadurch gekennzeichnet, dass** das Messen und Nachregeln in definierten Abständen erfolgt.

20. Verfahren nach einem der Ansprüche 17 bis 19, **dadurch gekennzeichnet, dass** die definierten Abstände ein Tag sind.

21. Verfahren nach einem der Ansprüche 17 bis 20, **dadurch gekennzeichnet, dass** der definierte Leistungslevel derjenige Level der Beleuchtungsleistung der schwächsten, für das Waferinspektionssystem noch akzeptierten Blitzlampe abzüglich deren erwarteten Leistungseinbuße durch den Alterungsprozess ist.

22. Verfahren nach einem der Ansprüche 17 bis 21, **dadurch gekennzeichnet, dass** die definierte prozentuale Lampenleistung 100 % der maximalen Lampenleistung ist.

23. Verfahren nach einem der Ansprüche 17 bis 22, **dadurch gekennzeichnet, dass** das Messen und das Nachregeln automatisiert erfolgt.
